**Europäisches Patentamt**

(19) **European Patent Office**

**Office européen des brevets**

(11) Publication number: **0 165 814**

**A2**

(12) # EUROPEAN PATENT APPLICATION

(21) Application number: **85304404.8**

(22) Date of filing: **20.06.85**

(51) Int. Cl.⁴: **B 65 G 47/90**

(30) Priority: **20.06.84 GB 8415735**

(43) Date of publication of application:
**27.12.85 Bulletin 85/52**

(84) Designated Contracting States:
**AT BE CH DE FR GB IT LI LU NL SE**

(71) Applicant: **BICC Public Limited Company**
**21, Bloomsbury Street**
**London, WC1B 3QN(GB)**

(72) Inventor: **Allard, Vincent Lee**
**28 Hazel Grove**
**Staines Middlesex(GB)**

(72) Inventor: **Gallard, Henry**
**6 Conway Crescent**
**Perivale Middlesex(GB)**

(74) Representative: **Poole, Michael John et al,**
**BICC plc Patents Department 38 Ariel Way Wood Lane**
**London W12 7DX(GB)**

(54) **Lifting arrangement.**

(57) A longitudinally extending arm (62) is attached to a vertical column (6) such that it is rotatable about the column and vertically movable therealong. The free end of the arm (62) has spool securing means (66) which in one embodiment comprises three fingers (67) pivotable to engage a spool (20).

In an alternative embodiment the spool securing means (66) comprises longitudinally extending legs (102) each having an inwardly directed ledge (103) for engagement under a flange (104) of the spool. A vacuum lift (109) is also described as a means for securing a spool.

Fig.1.

REG/8415735 **0165814**

## LIFTING ARRANGEMENT

This invention relates to an arrangement for lifting and moving spools, reels, drums, etcetera (hereinafter, for convenience, referred to as "spools") for storing electric cables, conductors or other flexible elongate members (hereinafter, for convenience, referred to as "cables").

By the generic term "spool" is meant a device comprising a longitudinally extending barrel with a flange extending outwardly away from the barrel at one end of the barrel (usually there are two flanges, one at each end). The cable is wound onto the barrel of the spool. The barrel is usually hollow, and the flange or flanges may extend (partially) over each open end of the barrel.

According to the present invention, an arrangement for lifting and moving spools comprises a longitudinally extending arm which is attached at one end to a longitudinally extending substantially vertical column, the arm being rotatable about the longitudinal axis of the column and movable in a vertical direction along the longitudinal axis of the column, the free end of the arm having means for securing a spool.

Preferably the longitudinal axis of the arm is substantially perpendicular to the longitudinal axis of the column.

The spool securing means preferably comprises at least three pivotable longitudinally extending legs, the longitudinal axis of each leg extending substantially vertically, each leg having at or adjacent its free

0165814

(lower) and an inwardly directed ledge for engaging behind a flange of the spool at the perimeter of the flange. Each leg preferably pivots about a point near the other end of the leg, and at said other end of the leg, the leg is pivotally attached to one end of a longitudinally extending substantially horizontal limb which is movable at its other end in a substantially vertical direction. In this case, when the said other end of each limb is moved upwards or downwards (thereby moving the longitudinal axis of the limb from its substantially horizontal position), the said other end of its corresponding leg moves inwards and the leg pivots about its pivot point so that the free end of the leg moves outwards. With the longitudinal axis of each limb substantially horizontal, therefore, the ledges can engage behind a flange of the spool. As the longitudinal axis of each limb is moved from its substantially horizontal position the ledges move outwardly to clear the flange. Preferably the said other end of each limb is pivotally attached to a single piston which is pneumatically movable in a vertical direction. The said other end of each limb is preferably moved upwards to move the longitudinal axis of the limb from its substantially horizontal position.

Alternatively, the spool securing means may comprise at least three vertically extending fingers each of which is pivotally mounted at its upper end and each of which has means at its free (lower) end for engaging the spool. The means for engaging the spool on each finger preferably comprises a friction-grip surface which can be pushed, by pivotal movement of the finger, against the inner surface of the barrel of the spool. Preferably the friction-grip surface is formed by a block of rubber. Alternatively, the means for engaging the spool may comprise a ledge which extends substantially horizontally (either inwardly or outwardly) for engaging behind the edges of an aperture in the upper surface of the spool In this case, the aperture in the spool preferably has a central axis which aligns with the longitudinal axis of the barrel of the spool, and in this case the ledge preferably extends outwardly away from the longitudinal axis of the barrel, and the longitudinal axis of the piston is preferably aligned with the longitudinal axis of the barrel. Each finger preferably has an inwardly extending surface which engages a vertically movable longitudinally extending piston. Vertical movement of the piston causes each finger to pivot about its pivot mounting, thereby causing substantially horizontal movement of the free end of each finger allowing engagement/dis-engagement with the spool. Preferably the piston is moved by pneumatic means. The pneumatic means either acts directly on the piston, or alternatively, the piston is moved by a pivotally mounted lever having two limbs substantially perpendicular to one another, one end of one limb being pivotally attached to the piston, one end of the other limb being pivotally attached to a second piston movable by the pneumatic means, the other ends of each limb being joined at the pivotal mounting of the lever.

As a further alternative, the spool securing means may have a vacuum lift which engages the upper flange of the spool.

Preferably the arm is secured to the column. In this case, the column is rotatable about its longitudinal axis, thereby allowing the arm to be rotatable about the longitudinal axis of the column. The column is preferably rotated by a motor acting either directly on the column, or indirectly by a belt moved by the motor and acting on a pulley on the column. The arm is preferably movably secured to the column, and the arm can move along the column, preferably under the action of pneumatic means, to provide the vertical movement of the arm.

Alternatively, the arm may be fixedly secured to the column, and in this case, the column may be movable in a vertical direction along its longitudinal axis, thereby providing the vertical movement of the arm. The column is preferably vertically moved by a pneumatic cylinder which is attached to substantially horizontal fixing plate on which the column is mounted. The pneumatic cylinder can move the fixing plate in a substantially vertical plane, thereby moving the column.

Obviously other suitable systems can be used for rotating and vertically moving the arm, for example, a tooth on the arm can engage in a corresponding threaded surface on the column, whereby rotation of the column causes movement of the arm in the vertical direction, and rotation of the arm.

With the arrangement of this invention, a spool can be secured by the spool securing means, lifted by moving the arm vertically, and moved by rotating the arm about the longitudinal axis of the column.

This arrangement has particular application when used with the winding apparatus described in our Patent Application No. 8415732 filed the same day as this application.

This invention also includes a method of lifting and moving a spool using the arrangement described herein. In particular a method of lifting and moving a spool includes the steps of securing a spool by means of spool securing means attached to one end of a longitudinally extending arm, the arm being attached at its other end to a longitudinally extending substantially vertical column, and lifting and moving the spool by vertically moving the arm along, and rotating the arm about, the longitudinal axis of the column.

The invention will now be further described, by way of example only, with reference to the accompanying drawings in which;

Figure 1 is a sectional side view of a spool lifting arrangement in accordance with the invention;

Figure 2 is a side elevation, shown partly in section, of an alternative embodiment of spool lifting arrangement in accordance with the invention;

Figure 3 is a schematic side view of a further embodiment of spool lifting arrangement in accordance with the invention;

Figures 4 and 5 are plan and sectional side views respectively of a part of the arrangement of Figure 3; and

Figures 6 and 7 are schematic side views of still further embodiments of spool lifting arrangements in accordance with the invention.

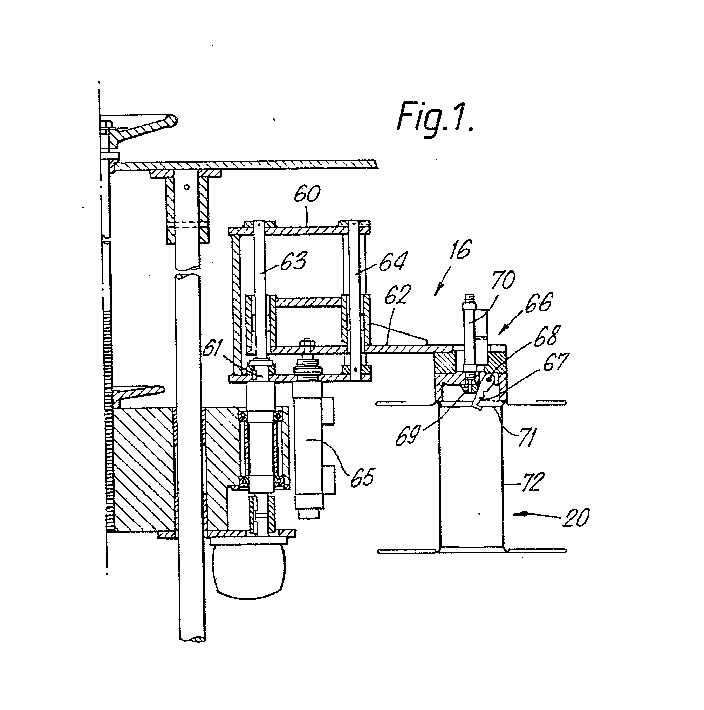

Referring to Figure 1 a spool lifting arrangement, shown generally at 16, comprises a frame 60 rotatably mounted about a column 61. The frame 60 includes an arm 62 vertically movable along shafts 63, 64 which extend parallel to the longitudinal axis of the column 61. A hydraulic cylinder 65 effects vertical movement of the arm 62.

At the end of the arm is spool securing means shown generally at 66. The spool securing means comprises a plurality of pivotable fingers, one of which is shown at 67. The fingers 67 are movable about their pivot points 68 by means of a piston 69, the piston 69 being vertically movable under the action of a hydraulic cylinder 70.

Activation of the piston 69 causes the fingers 67 to pivot and engage a spool 20, in Figure 1 by gripping under the upper flange 71 of the spool inside the barrel 72 thereof. Subsequent lifting of the arm 62 by the hydraulic cylinder 65 accordingly lifts the spool 20, and rotation of the frame 60 about the column 61, by means of a further hydraulic cylinder (not shown), permits lateral movement.

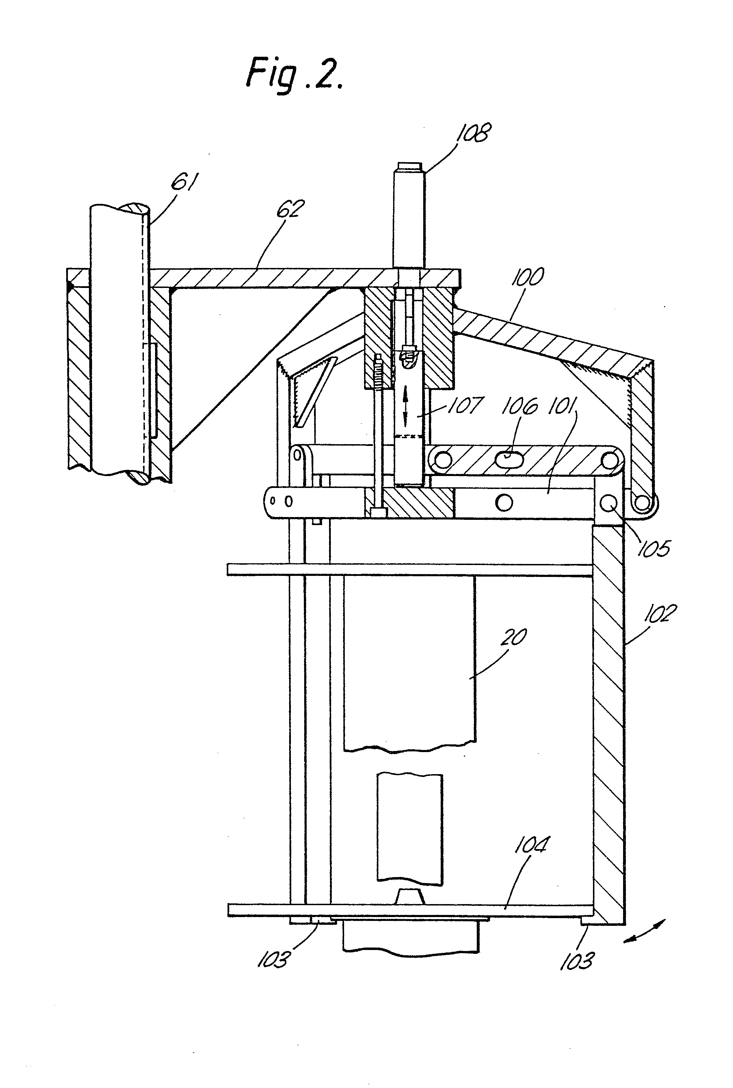

Figure 2 shows the column 61 and arm 62 having an alternative spool securing means. The securing means comprises a frame 100 from which depends a ring 101 having pivotally attached thereto three legs 102. Each leg 102 has at its lower end a ledge 103 which can engage behind the perimeter of the lower flange 104 of a spool 20. Attached at the top end of each leg 102, above the pivot point 105, is a linkage member 106. The three linkage members 106 are attached to a central piston 107, movable vertically under the action of a pneumatic cylinder 108.

Movement of the piston 107 operates the linkage members 106 to pivot each leg 102 outwardly to release the spool 20. Conversely the legs may be pivoted inwardly in similar fashion to grip the spool prior to lifting.

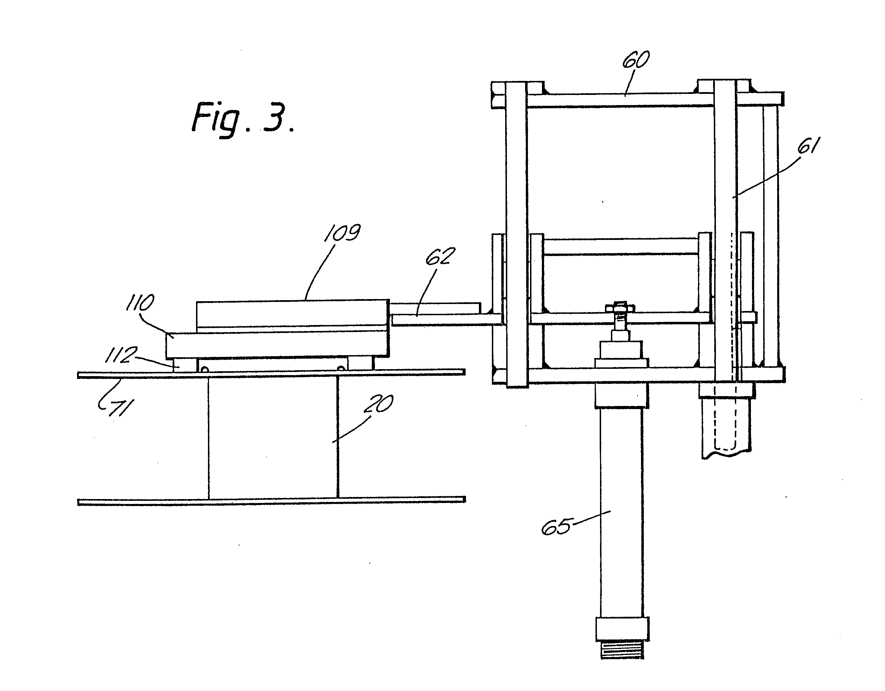

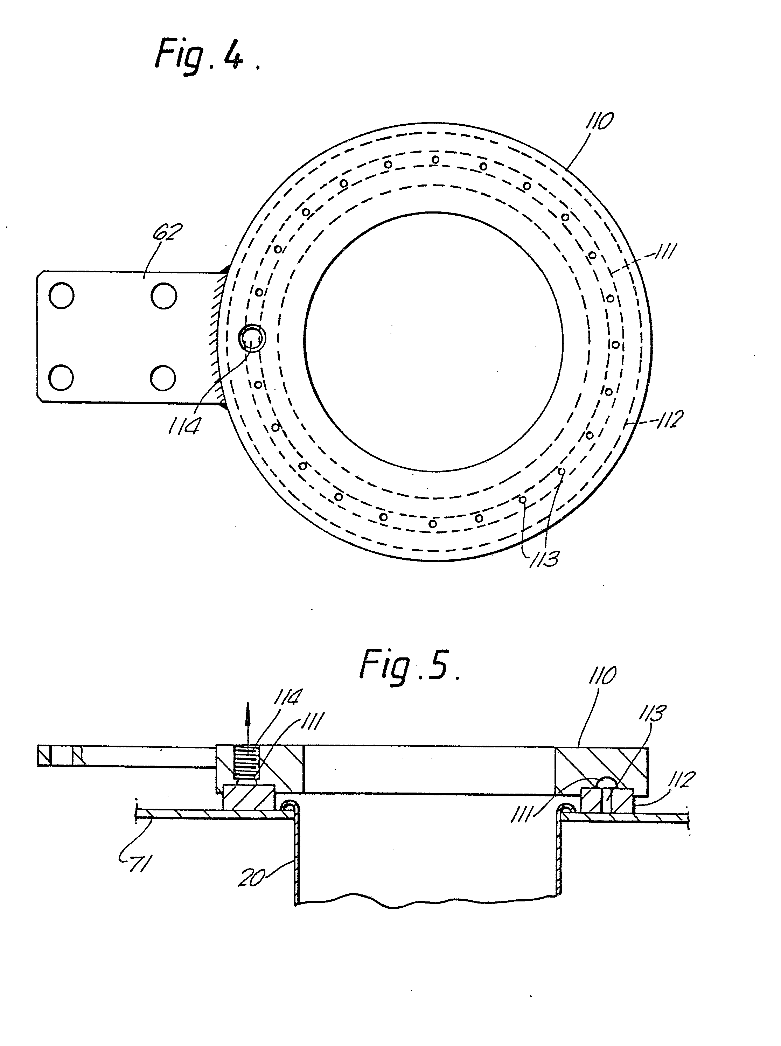

Figure 3 shows column 61, frame 60 and arm 62 having as a spool securing means a vacuum lift shown generally at 109. The vacuum lift 109, shown in more detail in Figures 4 and 5, comprises a circular ring 110 having running therethrough an annular channel 111. The lower part of the channel 111 is sealed by a rubber

sealing ring 112 having therein a plurality of apertures 113. A larger aperture 114 opening into the channel 111 from the upper part of the ring 110 has connected thereto a vacuum pump (not shown) which provides suction which is transferred to the apertures 113. The suction at the apertures 113, on operation of the vacuum pump, secures to the ring 110 the upper flange 71 of a spool 20. In this manner a spool may be secured to the arm 62 for lifting and moving.

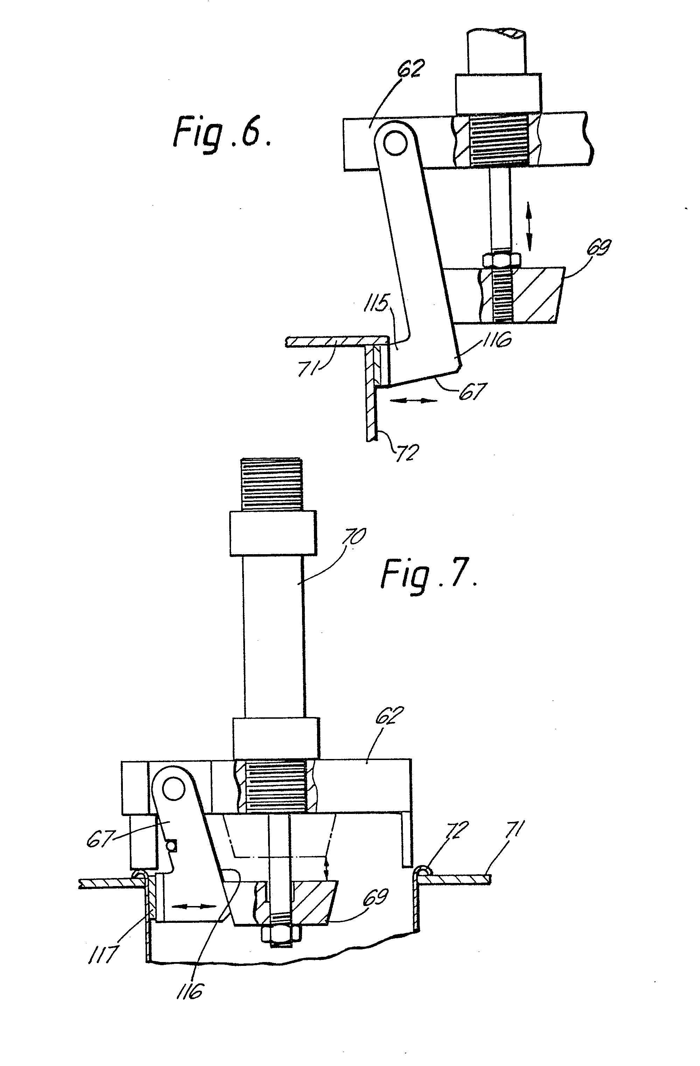

Figures 6 and 7 show two different arrangements for the engagement of a spool 20 by the fingers 67 of Figure 1. In Figure 6 the fingers 67 are provided with a ledge 115 which can engage the spool under the upper flange 71 inside the barrel 72 thereof. A piston 69 acts on an inwardly facing surface 116 of each finger 67 to move it into a position to engage the spool.

In Figure 7 the fingers 67 are provided with a friction grip surface in the form of a rubber block 117. When the fingers 67 are moved by the piston 69, the rubber block 117 contacts the inside of the barrel 72 of the spool to grip it for lifting.

0165814

CLAIMS

1. An arrangement for lifting and moving spools comprising a longitudinally extending arm (62) which is attached at one end to a longitudinally extending substantially vertical column (61), characterised in that the arm (62) is rotatable about the longitudinal axis of the column (61) and movable in a vertical direction along the longitudinal axis of the column (61), the free end of the arm (62) having means (66) for securing a spool (20).

2. An arrangement according to Claim 1 characterised in that the longitudinal axes of the arm (62) and the column (61) are substantially perpendicular one to the other.

3. An arrangement according to Claim 1 or Claim 2 characterised in that the spool securing means (66) comprises at least three pivotally mounted fingers (67), the fingers (67) having means for engaging the spool (20) and being movable between a first position in which they lie within the radial extent of the barrel (72) of the spool, and a second position in which the spool engaging means engage the spool (20).

4. An arrangement according to Claim 1 characterised in that the spool engaging means comprises a friction grip surface (117) which is moved, by pivotal movement of the finger (67), against the inner surface of the barrel (72) of the spool.

5. An arrangement according to Claim 3 characterised in that the spool engaging means comprises a ledge (115) extending from the finger (67) which is adapted to engage behind an edge or an aperture in the upper surface (71) of the spool (20).

6. An arrangement according to any of Claims 3 to 5 characterised in that there is provided a movable piston (69) adapted to contact a surface (116) of each of the fingers (67) to pivot them between the first and second positions.

7. An arrangement according to Claim 1 or Claim 2 characterised in that the spool securing means comprises at least three longitudinally extending legs (102), each leg having at or adjacent one end thereof an inwardly directed ledge (103), adapted to engage behind a flange (104) of the spool (20) at the perimeter thereof.

8. An arrangement according to Claim 1 or Claim 2 characterised in that the spool securing means comprises a vacuum lift (109) adapted to engage a flange (71) of the spool.

9. A method of lifting and moving a spool characterised in that it uses an arrangement as claimed in any of Claims 1 to 8.

10. A method of lifting and moving a spool characterised in that it includes the steps of securing a spool (20) by means of spool securing means (66) attached to one end of a longitudinally extending arm (62), the arm being attached at its other end to a longitudinally extending substantially vertical column (61), and lifting and moving the spool by vertically moving the arm along, and rotating the arm about, the longitudinal axis of the column (61).

Fig.1.

# Fig .2.

# Fig. 3.

## Fig. 4.

## Fig. 5.

*Fig.6.*

*Fig.7.*